# EUROPÄISCHE PATENTSCHRIFT

(11) **EP 1 020 008 B1**
(45) Veröffentlichungstag und Bekanntmachung des Hinweises auf die Patenterteilung: **23.07.2003**
(21) Anmeldenummer: 98955374.8
(22) Anmeldetag: 07.10.1998
(51) Int. Cl.: H02K 7/116, F16H 57/10, F16H 3/54, F02N 11/04

(54) **ELEKTRISCHE MASCHINE**
ELECTRIC MOTOR
MOTEUR ELECTRIQUE

(30) Priorität: 07.10.1997 DE 19744156; 12.03.1998 DE 19810592
(43) Veröffentlichungstag der Anmeldung: 19.07.2000
(73) Patentinhaber: ROBERT BOSCH GMBH, 70442 Stuttgart (DE)
(72) Erfinder: TURGAY, Barlas, D-70794 Filderstadt (DE); BOLZ, Martin-Peter, D-71720 Oberstenfeld (DE); GLAUNING, Juergen, D-71711 Steinheim (DE)
(86) Internationale Anmeldenummer: DE9802961
(87) Internationale Veröffentlichungsnummer: WO99018648

(56) Entgegenhaltungen:
- DE-U- 8 914 904
- US-A- 2 327 769
- US-A- 2 600 762
- US-A- 5 418 400
- "NEUES STARTER-GENERATOR-SYSTEM" MTZ MOTORTECHNISCHE ZEITSCHRIFT, Bd. 58, Nr. 10, Oktober 1997, Seite 630 XP000720125

## Beschreibung

Die Erfindung betrifft eine elektrische Maschine mit den im Oberbegriff des Patentanspruchs 1 genannten Merkmalen.

### Stand der Technik

Es ist bekannt, dass Brennkraftmaschinen in Kraftfahrzeugen mittels einer Startvorrichtung gestartet werden müssen, da sie nicht in der Lage sind von alleine anzulaufen. Zu diesem Zweck werden üblicherweise elektrisch betriebene Startermotoren eingesetzt, die über ein als so genanntes Einrückrelais ausgebildetes Starterrelais mit einer Spannungsquelle verbunden werden. Gleichzeitig wird zum Andrehen ein Ritzel des Startermotors mit einem üblicherweise auf einem Schwungrad der Brennkraftmaschine angebrachten Zahnkranz in Eingriff gebracht. Unmittelbar nach Erreichen des Selbstlaufes der Brennkraftmaschine muss der Startermotor ausgespurt werden, um einen erhöhten Verschleiß und eine starke Geräuschentwicklung zu vermeiden. Soll der Starter aus bestimmten Gründen in einem ständigen Eingriff bleiben, so muss er für einen Dauerbetrieb auch mit höheren Drehzahlen ausgelegt sein.

Ebenso ist bekannt, dass Kraftfahrzeuge mit einem Generator ausgerüstet sind, der einerseits für eine Versorgung eines elektrischen Bordnetzes des Kraftfahrzeuges und andererseits für ein Laden der zur zusätzlichen Pufferung des elektrischen Bordnetzes und zum Betrieb des Startermotors notwendigen Spannungsquelle sorgt. Dieser Generator, auch als Lichtmaschine bezeichnet, wird üblicherweise mittels Zugmittel direkt über die Kurbelwelle der Brennkraftmaschine angetrieben. Der Generator gibt seine Nennleistung typischerweise bei einer mittleren Drehzahl ab, muss jedoch so dimensioniert sein, dass er auch schon bei Leerlaufdrehzahl der Brennkraftmaschine eine ausreichende elektrische Leistung abgeben kann, um bei längeren Standzeiten im Leerlauf eine Entladung der Spannungsquelle zu verhindern. Gleichzeitig jedoch muss er für die Maximaldrehzahl der Brennkraftmaschine ausgelegt sein und dabei noch eine ausreichende Kühlung erfahren. Die Kühlung bei höheren Drehzahlen erfolgt meist durch Luftventilation, die durch aufgebrachte Lüfterflügel unterstützt wird.

Soll eine elektrische Maschine wechselweise als Starter wie auch als Generator betreibbar sein, stellt sich zunächst das Problem einer drehzahlmäßigen Auslegung. Beim Betrieb als Startermotor wird ein großes Anfahrdrehmoment sowie eine relativ hohe Leistung bei niedriger Drehzahl benötigt. Zur sicheren Übertragung einer solch großen Leistung wird zweckmäßigerweise eine Ankoppelung an einen Antriebsstrang der Brennkraftmaschine mit einer Zahnradpaarung gewählt, die nach dem Starten der Brennkraftmaschine getrennt wird. Der Generator muss jedoch in der Lage sein, über einen weiten Drehzahlbereich eine ausreichende Leistungsabgabe sicherzustellen, und dies, ohne bei Maximaldrehzahl einer Überhitzungsgefahr ausgesetzt zu sein. Soll der Generator für eine hohe elektrische Leistungsabgabe ausgelegt werden, wie sie für moderne Kraftfahrzeuge mit einer Vielzahl von elektrischen Verbrauchern wie Stell- und Servomotoren notwendig ist, stoßen herkömmliche Riementriebe an die Grenzen ihrer Leistungsfähigkeit.

Die nicht vorveröffentlichte Patentanmeldung DE-A-197 48 045 beschreibt eine elektrische Maschine, die über ein Planetengetriebe mit einer Getriebeeingangswelle eines Kraftfahrzeuges kuppelbar ist und die mit zwei verschiedenen Übersetzungsstufen sowohl als Startermotor zum Andrehen der Brennkraftmaschine als auch als Generator zur energetischen Versorgung eines elektrischen Bordnetzes des Kraftfahrzeuges umschaltbar ist. Nachteilig ist hier jedoch die vorgesehene Umschaltung über einen mechanisch anzulenkenden Hebel über einen linearen Verstellweg sowie die ausschließlich axial wirkenden Reibflächen zur Blockierung eines Hohlrades des Planetengetriebes an dessen Gehäuse oder Planetenträger. Diese Anordnung macht aufgrund der bei kleinen Radien nur mit hohem Anpressdruck ausreichend sicher zu übertragenden Kräfte eine hohe Betätigungskraft am Hebel und/oder eine voluminöse Bauweise des Planetengetriebes erforderlich. Nachteilig ist zudem bei der beschriebenen Ausführungsform, dass keine Selbsthemmung der Schaltstellungen im Planetengetriebe vorgesehen ist. Somit müssen die notwendigen hohen Betätigungskräfte zur Aufrechterhaltung einer gewünschten Schaltstellung permanent aufgebracht werden. Kleinere elektrisch betriebene Servomotoren eignen sich somit nicht zur Aufbringung der Verstellkräfte. Stattdessen sind beispielsweise hydraulische Stellantriebe oder mechanische Stelleinrichtungen mit ausreichenden Hebelübersetzungen vonnöten, was einen konstruktiven Mehraufwand erfordert.

Aus der DE 89 14 904 U ist eine elektrische Maschine zum Starten einer Brennkraftmaschine und zur Spannungsversorgung eines Bordspannungsnetzes eines Kraftfahrzeuges bekannt. Diese Maschine ist mit einem Planetengetriebe wirkverbunden, über das die elektrische Maschine mit der Brennkraftmaschine koppelbar ist, und wobei die elektrische Maschine durch Umschalten des Planetengetriebes zwischen einem gegenüber einem Gehäuse des Planetengetriebes blockierten Hohlrad einerseits und dem gegenüber einem umlaufenden Planetenträger blockierten Hohlrad andererseits zwischen einem Motorbetrieb und einem Generatorbetrieb umschaltbar ist.

Aus US-A-2 600 762 ist eine elektrische Maschine mit umschaltbarem Planetengetriebe bekannt, bei dem die Umschaltung selbsttätig durch axiales Verschieben des Planetenträgers erfolgt. Das Hohlrad kann zwar mit dem Planetenträger verbunden sein, aber nicht gegenüber dem Getriebegehäuse blockiert werden.

Aus US-A-2 327 769 ist eine weitere elektrische Maschine mit umschaltbarem Planetengetriebe bekannt, bei dem zusätzlich ein mechanisches Schaltmittel angeordnet ist, durch das ein Sonnenrad gegenüber dem Getriebegehäuse blockiert werden kann. Das Hohlrad kann hierbei nicht blockiert werden, da es direkt mit dem Rotor der elektrischen Maschine gekoppelt ist. Eine weitere elektrische Maschine ist aus US-A-5 418 400 bekannt, bei der das Hohlrad direkt im Rotor angeordnet ist, so dass dieses nicht blockierbar ist.

### Vorteile der Erfindung

Die erfindungsgemäße Vorrichtung mit den im Patentanspruch 1 genannten Merkmalen bietet den Vorteil, dass durch wenigstens zwei Antriebsstellungen sowie eine Neutralstellung eines Planetengetriebes als Antriebsübersetzung für eine elektrische Maschine diese sowohl als Starter zum Andrehen der Brennkraftmaschine als auch als Generator zur Versorgung eines Bordspannungsnetzes des Kraftfahrzeuges eingesetzt werden kann. Die Anordnung der elektrischen Maschine mit dem vorgeschalteten Planetengetriebe, beispielsweise am Antriebsstrang des Kraftfahrzeuges zwischen einer Kupplung und einem Schaltgetriebe, vorzugsweise an einer Getriebeeingangswelle, weist insbesondere den Vorteil auf, dass ohne aufwendige Vorrichtungen zum Ein- und Ausspuren eines herkömmlichen Starters die elektrische Maschine in ständigem Eingriff bleiben kann, und eine Steuerung des Planetengetriebes auf einfache Weise über die Motorsteuerung auf Grundlage fester Parameter vorgenommen werden kann.

Durch die neben den beiden Antriebsstellungen zusätzlich vorgesehene Neutralstellung kann auf einfache und effektive Weise, wahlweise in automatisierter Form, sowohl einer drohenden Überlastung der elektrischen Maschine vorgebeugt werden, als auch in bestimmten Betriebszuständen eine Verringerung des Energieverbrauches der Brennkraftmaschine durch einfaches Unterbrechen der Wirkverbindung erzielt werden. Die Umschaltung des Planetengetriebes kann in effektiver Weise durch ein reibschlüssiges Festlegen eines Hohlrades entweder gegen einen Planetenträger oder gegen ein Gehäuse des Planetengetriebes erfolgen, wobei diese Umschaltung über ein mechanisches Schaltmittel bewirkt wird, das auf unterschiedliche Weise, beispielsweise hydraulisch oder elektromotorisch, angesteuert werden kann. So kann eine erste Endstellung eine Blockade des Hohlrades am Gehäuse, eine zweite Endstellung eine Blockierung des Hohlrades am Planetenträger vorsehen. In der Neutralstellung ist das Hohlrad frei drehbar, wodurch eine Wirkverbindung zwischen Antriebsstrang des Kraftfahrzeuges und elektrischer Maschine unterbrochen ist.

In vorteilhafter Weise sind die beiden End- beziehungsweise Arbeitsstellungen des Planetengetriebes unterschiedlich übersetzt. So kann diese Übersetzung beispielsweise in der ersten Endstellung i = 5 betragen und in der zweiten Endstellung i = 2. Dadurch kann beim Andrehen der Brennkraftmaschine ein hohes Moment bei niederen Drehzahlen übertragen werden. Beim regulären Lauf der Brennkraftmaschine dagegen läuft die elektrische Maschine mit hohen Drehzahlen und kann auf diese Weise eine hohe elektrische Ausgangsleistung liefern. Zudem ist auf diese Weise eine Umschaltung bei einer bestimmten Drehzahl der Brennkraftmaschine, beispielsweise bei 1.500 U/min, möglich, womit eine ausreichende elektrische Versorgung des Bordnetzes auch bei länger anhaltenden Leerlaufdrehzahlen sichergestellt ist.

Die mechanische Umschaltung des Planetengetriebes erfolgt zweckmäßigerweise über ein mit dem Schalthebel des Kraftfahrzeuges gekoppeltes Stellglied, das wahlweise zusätzlich in Abhängigkeit verschiedener Betriebsparameter gesteuert werden kann. Um eine kompakte Bauweise zu erzielen und gleichzeitig mit geringen Verstellkräften eine wirksame Blockierung des Hohlrades entweder am Gehäuse oder am Planetenträger zu erzielen, sind in einer bevorzugten Ausführungsform wenigstens zwei Bremsbacken vorgesehen, die das Hohlrad an dessen größtem Umfang radial von außen umgreifen. Auf diese Weise können bereits mit geringen Verstellkräften hohe Kräfte übertragen werden. Das mechanische Schaltmittel kann elektromagnetisch, hydraulisch oder pneumatisch betätigt sein - je nach vorhandener Fahrzeugausrüstung.

Weitere vorteilhafte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine Schnittansicht einer elektrischen Maschine mit vorgeschaltetem Planetengetriebe;
- Figur 2: eine schematische Draufsicht auf die elektrische Maschine entsprechend Figur 1;
- Figur 3: eine Teil-Frontansicht auf einen Wirkmechanismus zur Umschaltung des Planetengetriebes;
- Figur 4: eine perspektivische Teilansicht des Planetengetriebes in einer ersten Schaltstellung I;
- Figur 5: eine perspektivische Teilansicht des Planetengetriebes in einer Schaltstellung III;
- Figur 6: eine perspektivische Teilansicht des Planetengetriebes in einer zweiten Schaltstellung II;
- Figur 7: eine schematische Perspektivansicht auf eine Variante der elektrischen Maschine;
- Figur 8: eine Schnittansicht der elektrischen Maschine entsprechend Figur 7;
- Figur 9: eine perspektivische Teilschnittansicht der elektrischen Maschine mit Planetengetriebe entsprechend Figur 8;
- Figur 10a: eine perspektivische Ansicht des Verstellringes des Planetengetriebes;
- Figur 10b: eine perspektivische Ansicht des Innenringes des Planetengetriebes;
- Figur 11: eine perspektivische Teilschnittansicht des Planetengetriebes entsprechend Figur 9 in Schaltstellung I;
- Figur 12: eine perspektivische Teilschnittansicht des Planetengetriebes entsprechend Figur 11 in Schaltstellung III;
- Figur 13: eine perspektivische Teilschnittansicht des Planetengetriebes entsprechend Figur 11 in Schaltstellung II und
- Figur 14: eine schematische Draufsicht auf die elektrische Maschine entsprechend Figur 7 im eingebauten Zustand.

### Beschreibung der Ausführungsbeispiele

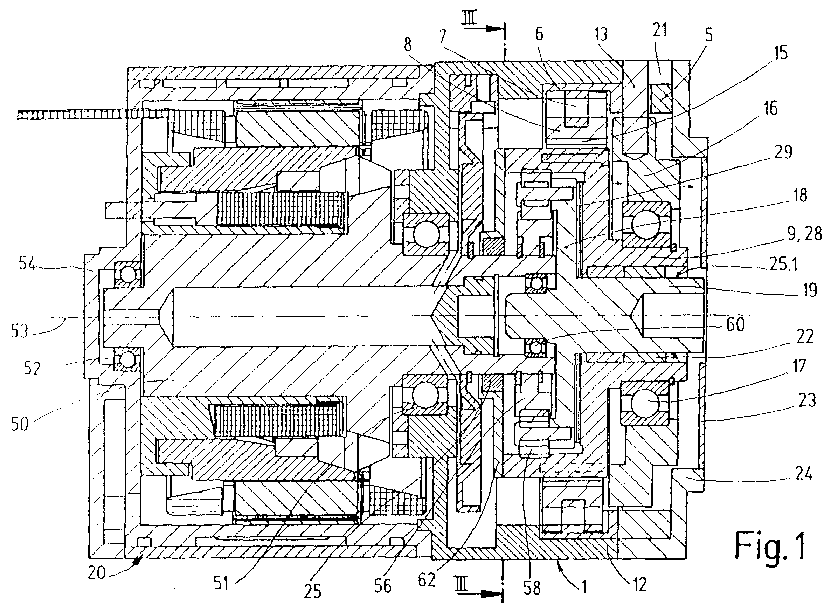

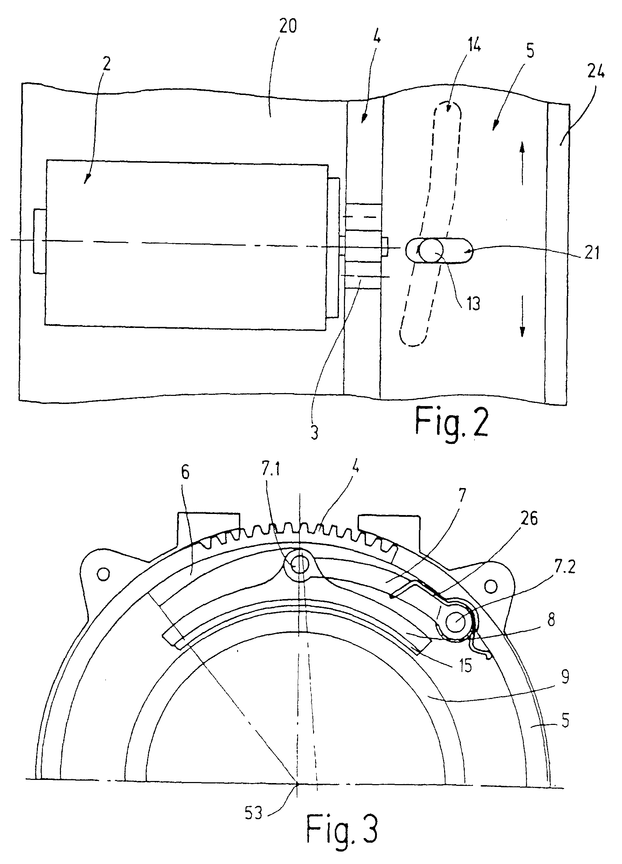

In Figur 1 ist in einer Vollschnitt-Darstellung und in Figur 2 in einer schematischen Draufsicht eine elektrische Maschine 20 dargestellt, die mit einem Planetengetriebe 1 wirkverbunden ist und mit diesem eine Baueinheit bildet. Ein Rotor 50 der elektrischen Maschine 20 ist in zwei Wälzlagern 51 und 52 in einem Gehäuse 54 gelagert. Die Wälzlager 51 und 52 sind in der Figur 1 beispielhaft als Rillenkugellager ausgeführt. Ebenso möglich ist jedoch die Verwendung von Kegelrollen- oder Vierpunktkugellagern oder ähnlichen Lagerbauformen. Das kleinere Wälzlager 52, im dargestellten Ausführungsbeispiel links eingezeichnet, stützt sich mit seinem Außenring in einem Sitz des Gehäuses 54 ab, das vorzugsweise zylindrisch ausgebildet ist. Auf die Bauart der elektrischen Maschine 20 soll hier nicht näher eingegangen werden. Für den vorliegenden Anwendungsfall ist in erster Linie wichtig, dass neben einem generatorischen auch ein motorischer Betriebsmodus möglich ist. Die elektrische Maschine 20 soll zum Andrehen einer Brennkraftmaschine eines Kraftfahrzeuges in der Lage sein und bei laufender Brennkraftmaschine als Generator ein elektrisches Bordnetz versorgen. Daher muss die elektrische Maschine 20 im motorischen Betrieb über ein hohes Anfahrdrehmoment verfügen können und im generatorischen Betrieb über einen möglichst hohen Wirkungsgrad über weite Drehzahlenbereiche verfügen.

An dem im Wälzlager 52 gelagerten Wellenende gegenüberliegenden Ende des Rotors 50 ist dieser in einem stärker dimensionierten Wälzlager 51 gelagert. An diesem Ende ist der Rotor 50 der elektrischen Maschine 20 zudem mit einer Verzahnung versehen, die ein zentrales Sonnenrad 56 des Planetengetriebes 1 bildet. Das Planetengetriebe 1 ist fest verbunden mit der elektrischen Maschine 20, das heißt, ein Gehäuse 12 des Planetengetriebes 1 ist fest verschraubt und/oder verblockt mit dem Gehäuse 54 der elektrischen Maschine 20. Der Rotor 50 mit dem Sonnenrad 56 sowie alle im Folgenden beschriebenen rotierenden Teile des Planetengetriebes 1 sind koaxial zu einer Drehachse 53 angeordnet. Das Sonnenrad 56 kämmt mit wenigstens drei oder mehr Planetenrädern, die im Folgenden als Planeten 58 bezeichnet sind. Die Planeten 58 sind frei drehbar gelagert, axial nicht verschieblich und an einem Planetenträger 18 befestigt. Dieser Planetenträger 18 ist wiederum fest verbunden mit einer Planetenträgerwelle 19 beziehungsweise mit dieser einteilig ausgeführt, die wiederum mit einem Antriebsstrang des Kraftfahrzeuges wirkverbunden ist. Eine bevorzugte Position dieser Wirkverbindung ist beispielsweise eine Getriebeeingangswelle, das heißt bei einem Antriebsstrang mit manuellem Wechselgetriebe und manuell betätigter Kupplung zwischen diesen beiden Bauteilen.

Der Planetenträger 18 ist als kurze Welle ausgeführt, wobei das im dargestellten Ausführungsbeispiel rechts liegende Wellenende als Planetenträgerwelle 19 bezeichnet ist. Die Planetenträgerwelle 19 ist einem hohlwellenartigen Absatz 28 über ein Nadellager 22 gelagert. Der Absatz 28 ist einteilig mit einem Hohlrad 9 des Planetengetriebes 1 ausgeführt. Zwischen dem Absatz 28 und der dagegen verdrehbaren Planetenträgerwelle 19 ist eine Dichtung 25.1, beispielsweise ein Wellendichtring, eingesetzt. Das Hohlrad 9 kann sich entweder frei drehen kann oder ist, über Schaltmittel betätigt, entweder axial gegen den Planetenträger 18 oder radial gegen ein Gehäuse 12 des Planetengetriebes 1 festlegbar. Durch diese drei Möglichkeiten, das Hohlrad 9 in seiner Relativdrehbewegung zu beeinflussen, sind gleichzeitig drei mögliche Schaltstellungen des Planetengetriebes 1 definiert. Zur axialen Festlegung des Hohlrades 9 gegen den Planetenträger 18 weisen diese Teile jeweils eine parallel zueinander stehende konzentrische Anlagefläche auf, wobei wahlweise auf einer dieser beiden Anlageflächen oder auch auf beiden ein Bremsbelag 29 vorgesehen ist.

Über ein Lager 17, das ausreichend dimensioniert sein muss, um axiale und radiale Kräfte aufnehmen zu können, ist der Absatz 28 des Hohlrades 9 in einem Innenring 16 so fixiert, dass das Hohlrad 9 und der Innenring 16 frei gegeneinander verdrehbar, aber axial und radial fixiert sind. Der Innenring 16 ist mit wenigstens einem radial nach außen ragenden Stift 13 versehen, der in einem Querloch 21 im Gehäuse 12 ausschließlich in axialer Richtung entlanggleiten kann. Der Innenring 16 kann sich somit nicht verdrehen, ist jedoch axial leicht verschieblich in einem Gleitsitz in einem Lagerschild 24 gelagert, der stirnseitig mit dem Gehäuse 12 verbunden ist und gleichzeitig dessen Deckel bildet.

Erkennbar ist weiterhin ein Verstellring 5, der an seinem äußeren Umfang in einem Gleitsitz im Gehäuse 12 und im Lagerschild 24 drehbar und axial fest geführt ist. Am Verstellring 5 ist eine schiefe Ebene 6 am inneren Umfang vorgesehen, die jedoch erst in Figur 3 in ihrer Funktion verdeutlicht wird. Ein Hebel 7 ist mit einem Bremsbacken 8 verbunden, der je nach Stellung des Verstellringes 5 radial auf den äußeren Umfang des Hohlrades 9 zu drücken vermag. Weiterhin ist eine Durchführung des Stiftes 13 durch den Verstellring 5 in einer hier nicht näher erkennbaren Kulissenlaufbahn 14 für den Stift 13 vorgesehen. Zur Abdichtung der elektrischen Maschine 20 gegen das vorzugsweise mit einer Schmierölfüllung versehene Planetengetriebe 1 ist eine erste Dichtung 25 vorgesehen, die in einen Sitz in einer mit dem Hohlrad 9 verbundenen Trennwand 62 zwischen Sonnenrad 56 und der rechten Lagerung des Rotors 50 eingelegt ist und auf einer Dichtfläche des Rotors 50 anliegt. Diese Dichtung 25 kann beispielsweise als Wellendichtring ausgeführt sein. Um eine einwandfreie Montage zu ermöglichen, ist die Rotorwelle zuerst zu montieren, anschließend die Dichtung 25 einzulegen und dann erst das Sonnenrad 56 auf die Rotorwelle zu fixieren. Die zweite Dichtung 25.1 sorgt für die Abdichtung der als Abtriebswelle des Planetengetriebes 1 fungierenden Planetenträgerwelle 19 nach außen und umschließt zu diesem Zweck den vorderen Teil der Planetenträgerwelle 19 und dichtet sie gegen den Absatz 28 des Hohlrades 9 ab.

Figur 2 verdeutlicht eine außen auf den Verstellring 5 aufgebrachte Verzahnung eines Zahnkranzes 4, die mit einem Ritzel 3 eines zur elektrischen Maschine 20 achsenparallel angeordneten elektrischen Motors 2 wirkverbunden ist. Durch wenige Ritzelumdrehungen des elektrischen Motors 2 kann der Verstellring 5 um einen festen Winkel verdreht werden, wodurch eine Übersetzungsänderung des Planetengetriebes 1 bewirkbar ist. Erkennbar in der Draufsicht gemäß Figur 2 ist weiterhin der radial nach außen durch das Querloch 21 aus dem Gehäuse 12 ragende Stift 13, der in der schrägen Kulissenlaufbahn 14, hier in unterbrochener Linie gezeichnet, im Verstellring geführt wird und die axiale Verschiebung des Hohlrades 9 gegen den Planetenträger 18 ermöglicht.

Der Stift 13 ist fest im Innenring 16 fixiert. Aufgrund der sich nur um einen kleinen Weg in axialer Richtung erstreckenden Führung des Querlochs 21 kann sich der Stift 13 und damit der Innenring 16 nicht in Umfangsrichtung verdrehen. Eine Verdrehung in Umfangsrichtung ist nur für den Verstellring 5 möglich, soweit dies die Verzahnung des Zahnkranzes 4 zulässt. Da die sich über einen ungefähr der Länge der Verzahnung des Zahnkranzes 4 entsprechenden Weg in Umfangsrichtung erstreckende Kulissenlaufbahn 14 an einem Ende, in der gezeigten Darstellung nach unten weisenden Ende, eine axiale Neigung in Richtung zur elektrischen Maschine 20 aufweist, wird der Stift 13 sowie der mit diesem fest verbundene Innenring 16 bei einer Verdrehung des Verstellringes 5 in axialer Richtung verschoben.

Der Innenring 16 ist an seinem äußeren Umfang in dem mit dem Gehäuse 12 stirnseitig fest verbundenen Lagerschild 24 derart geführt, dass er spiel- und verkippfrei axial verschieblich ist. An seinem inneren Umfang ist der Innenring 16 über das axiale und radiale Kräfte aufnehmende Wälzlager 17 mit dem Hohlrad 9 verbunden, das zu diesem Zweck den hohlwellenartigen Absatz 28, mit geringerem Durchmesser als das Hohlrad 9 selbst, aufweist. Über den mit einer axialen Kraft beaufschlagbaren Innenring 16 und das axial auf dem Absatz 28 festgelegte Wälzlager 17 kann somit das Hohlrad 9 axial verschoben werden und vermag dadurch stirnseitig gegen den Planetenträger 18 zu drücken, wodurch eine gegenseitige Blockade erzielbar ist. Für das Wälzlager 17 eignet sich beispielsweise ein Kugel-, Kegelrollen- oder Vierpunktlager, das ausreichende axiale und radiale Kräfte übertragen kann. Diese Arbeitsstellung des Planetengetriebes 1 wird im Folgenden mit einer Schaltstellung II bezeichnet.

Figur 3 zeigt in einem Teilschnitt III-III aus Figur 1 eine weitere Funktion des Verstellringes 5. Gleiche Teile wie in den vorangegangenen Figuren sind mit gleichen Bezugszeichen versehen und nicht nochmals erläutert. Erkennbar in dieser Draufsicht ist die außen am Umfang des Verstellringes 5 aufgebrachte Verzahnung 4, die es ermöglicht, den Verstellring in seinem Gleitsitz im Gehäuse 12 um einen bestimmten Winkel zu verdrehen. Dies erfolgt im dargestellten Ausführungsbeispiel durch den als Servomotor wirkenden elektrischen Motor 2, dessen angetriebenes Ritzel 3 in Wirkverbindung mit der Verzahnung 4 steht.

An seinem inneren Umfang ist der Verstellring 5 mit wenigstens zwei schiefen Ebenen 6 versehen, jeweils ein Abschnitt mit sich stetig verringerndem Radius, der bei einer Verdrehung des Verstellringes 5 nach rechts auf einen Kopf 7.1 eines Hebels 7 drückt und den in einem gehäusefest gelagerten Drehpunkt 7.2 nach innen, das heißt in Richtung der Drehachse 53, verschwenkt. Zur Erzielung einer degressiven Wirkung kann sich der Radius der schiefen Ebene 6 anfangs stärker und zum Ende hin schwächer verjüngen. Auf diese Weise wird über den anfänglichen Verstellweg ein größerer Hub der Hebel 7 erzielt. Gegen Ende der Verstellung werden die Hebel nur noch um einen sehr geringen Weg an das Hohlrad 9 angedrückt, woraus eine Kraftübersetzung resultiert. Am Kopf 7.1 des Hebels 7 ist drehbar ein bogenförmiger Bremsbacken 8 befestigt, der an seiner Innenseite mit einem Bremsbelag 15 versehen ist. Diese Innenseite folgt der Kontur des äußeren Umfanges des Hohlrades 9 und kann dieses somit abbremsen beziehungsweise vollständig blockieren.

Um bei freigegebenem Hebel 7, das heißt bei nach links verdrehtem Verstellring 5, den Bremsbacken 8 aufgrund von Schwer- oder wechselnden Beschleunigungskräften nicht unkontrolliert auf dem Hohlrad 9 schleifen zu lassen, drückt eine Feder 26 den Hebel 7 zur schiefen Ebene 6, das heißt vom Hohlrad 9 weg. Die Bogenlänge der schiefen Ebene 6 entspricht zweckmäßigerweise der durch die Bogenlänge der Verzahnung des Zahnkranzes 4 vorgegebenen Verstellung des Verstellringes 5. Zweckmäßigerweise sind am Verstellring 5 wenigstens zwei, sich symmetrisch gegenüberstehende, schiefe Ebenen 6 mit den zugehörigen Hebeln 7 mit Bremsbacken 8 und Bremsbelag 15 vorgesehen. Ebenso möglich sind jedoch auch drei oder mehr entsprechende Blockiereinrichtungen, jeweils im gleichen Abstand zueinander.

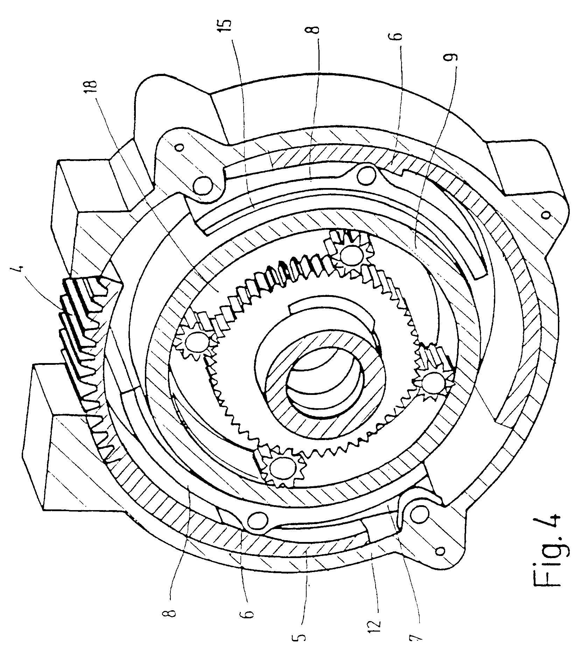

Die Funktion des Planetengetriebes 1 mit seinen drei möglichen Schaltstellungen I, II, III wird anhand der folgenden Figuren 4, 5 und 6 näher beschrieben. Erkennbar in diesen Figuren ist eine beispielhafte Anzahl von vier Planeten 58. Zur Sicherstellung einer eindeutigen Festlegung der Planeten 58, des Hohlrades 9 und des Sonnenrades 56 sind wenigstens drei Planeten 58 notwendig. Wahlweise können auch mehr als drei oder vier Planeten, möglichst gleichmäßig am Umfang verteilt, Verwendung finden, wobei jedoch zunehmende Reibungsverluste durch mehr miteinander im Eingriff stehende Zahnräder zu berücksichtigen sind.

Figur 4 zeigt das Planetengetriebe in einer ersten Schaltstellung I. Der Verstellring 5 ist hierbei in der gezeigten Ansicht nach links verdreht, womit die beiden am Innendurchmesser des Verstellringes 5 befindlichen, in Umfangsrichtung sich verjüngenden schiefen Ebenen 6 verdreht werden, jeweils auf den Kopf 7.1 der Hebel 7 drücken und dabei die Bremsbacken 8 mit den Bremsbelägen 15 außen auf das Hohlrad 9 des Planetengetriebes 1 drücken. Das Hohlrad 9 wird damit blockiert, und die Drehzahl des Rotors 50 ist untersetzt zur Drehzahl der Planetenträgerwelle 19.

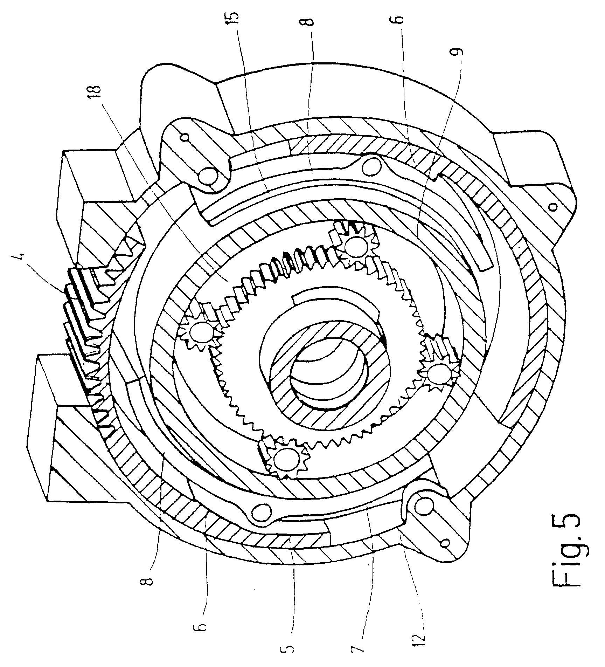

Figur 5 zeigt die Schaltstellung III des Planetengetriebes 1. Durch Drehen des verstellbaren Ringes 5 nach rechts wird die Schaltstellung I aufgehoben, die Stifte 13 werden zu diesem Zeitpunkt in radialer Richtung nicht verschoben. Da sich die Stifte an einem Punkt des Verfahrweges befinden, wo die durch die Kulissenebene 14 vorgegebene Stiftlaufbahn im Verstellring 5 nur eine Umfangsrichtung zulässt, drehen sie durch. Da nun die beiden Bremsbeläge 15 freiliegen, ist die Stellung "neutral" erreicht. Das Hohlrad 9 kann sich, angetrieben von den Planeten 58, frei drehen, da es weder gegen das Gehäuse 12 noch gegen den Planetenträger 18 festgelegt ist. Auf den Rotor 50 wirkt somit kein Antriebsmoment - er kann frei auslaufen.

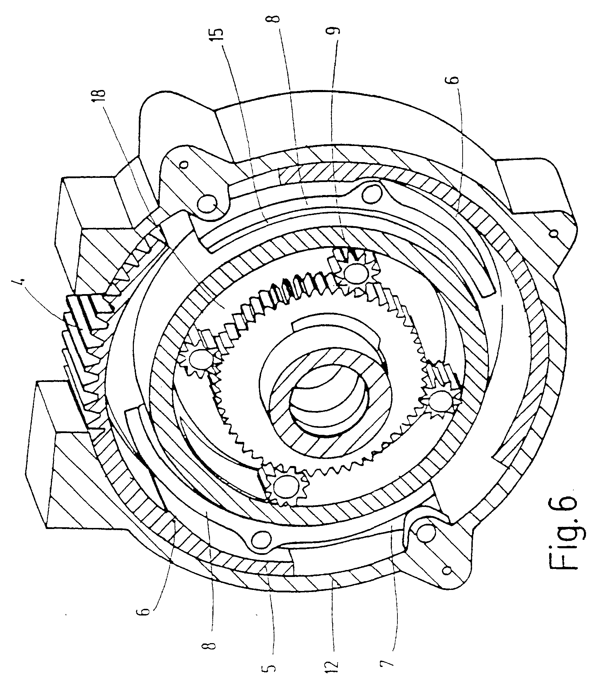

Figur 6 zeigt das Planetengetriebe 1 in der weiteren Schaltstellung II. Hierbei ist der Verstellring 5 vollständig nach rechts verdreht, wodurch die Stifte 13 an den Punkt des Verfahrweges gelangen, wo auch die axiale Verschiebung des Innenringes 16 beginnt. Die Bewegung der Stifte 13 wird in der bogenförmig angeordneten Kulissenlaufbahn 14 im Verstellring 5 fortgeführt, wobei auch eine Selbsthemmung möglich ist. Das heißt, bei stehendem elektrischen Motor 2 wird die jeweils erreichte Schaltstellung I, II oder III auch ohne zusätzliche Haltekräfte beibehalten. Das Hohlrad wird nun durch den mit den Stiften 13 im Verstellring 5 geführten Innenring über das Wälzlager 17 in Richtung Planetenträger 18 bewegt. Dadurch kommt es zum Festhalten des Hohlrads 9 mit der Planetenträgerwelle 19 mittels Bremsbelag 29 an der Innenstirnfläche des Hohlrads 9. Durch die Lagerung im Wälzlager 17 kann der Innenring 16 ausschließlich axiale Bewegungen machen. Die Drehzahl des Rotors 50 entspricht hierbei der Drehzahl des Planetenträgers 18.

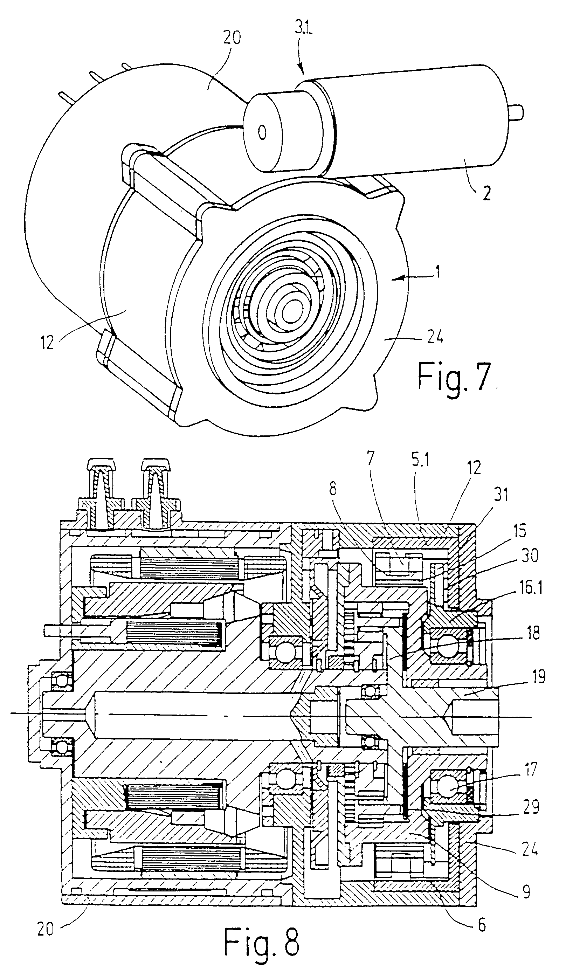

Die Figuren 7 und 8 zeigen in einer schematischen Perspektivansicht (Figur 7) und in einem Vollschnitt (Figur 8) eine Variante der elektrischen Maschine 2 mit wirkverbundenem Planetengetriebe 1. Gleiche Teile wie in den vorangegangenen Figuren sind mit gleichen Bezugszeichen versehen und nicht nochmals erläutert. Bei im Wesentlichen gleichen Aufbau wie in der zuvor beschriebenen Ausführungsform ist jedoch ein wesentlicher Unterschied, nämlich die anders angebaute elektrische Maschine 2, gut erkennbar. Diese als Servomotor zur Umschaltung des Planetengetriebes 1 fungierende elektrische Maschine 2 ist in dieser Ausführungsform mit ihrer Drehachse senkrecht zur Drehachse 53 des Planetengetriebes 1 angeordnet und wirkt über einen Schneckentrieb 3.1 anstatt über ein Ritzel 3 auf einen modifizierten Verstellring 5.1.

Figur 8 zeigt die elektrische Maschine 20 mit wirkverbundenem Planetengetriebe 1 entsprechend Figur 7 in einer Vollschnittansicht. Da bei dieser Variante gegenüber der in Figur 1 dargestellten Ausführungsform im Wesentlichen nur die Betätigung des Verstellringes 5.1 sowie die axiale Krafteinleitung auf das Hohlrad 9 über einen modifizierten Innenring 16.1 abgewandelt ist, der übrige Aufbau jedoch nahezu unverändert bleibt, soll im Folgenden nur auf die modifizierten Teile sowie deren Funktion näher eingegangen werden.

Die Verstellung des Planetengetriebes 1 erfolgt durch eine Betätigung des elektrischen Motors 2, der über seinen mit der Verzahnung 4 im Eingriff stehenden Schneckentrieb 3.1 den Verstellring 5.1 verdrehen kann. Die radiale Blockierung des Hohlrades 9 über die mit dem Verstellring 5.1 verbundenen wenigstens zwei Bremsbacken 8 funktioniert auf die gleiche Weise wie oben beschrieben. Die axiale Festlegung des Planetenträgers 18 gegen das Hohlrad 9 ist jedoch bei dieser Variante modifiziert, da hierbei kein in einer Kulissenlaufbahn geführter Stift vorgesehen ist, sondern miteinander axial korrespondierende Wirkflächen im Verstellring 5.1 und im Innenring 16.1. Diese Wirkflächen bestehen aus wenigstens zwei axial angeordneten Erhebungen 30 im Verstellring 5.1, die mit entsprechend passenden wenigstens zwei axial angeordneten schiefen Ebenen 31 im Innenring 16.1 derart zusammenwirken, dass bei einer Verdrehung des Verstellringes 5.1 der Innenring 16.1 eine axiale Verschiebung des Hohlrades 9 gegen den Planetenträger 18 erfahren kann. Zu diesem Zweck ist eine direkte axiale Anlage des Innenringes 16.1 an eine entsprechende Fläche des Hohlrades 9 vorgesehen, so dass das Wälzlager 17 in dieser Ausführungsform im Wesentlichen nur für die radiale Festlegung und Abstützung des Innenringes 16.1 gegen den Absatz 28 des Hohlrades 9 sorgen muss. Wie zur Figur 1 bereits beschrieben, ist der Absatz 28 über Nadellager 22 auf der Planetenträgerwelle 19 gelagert.

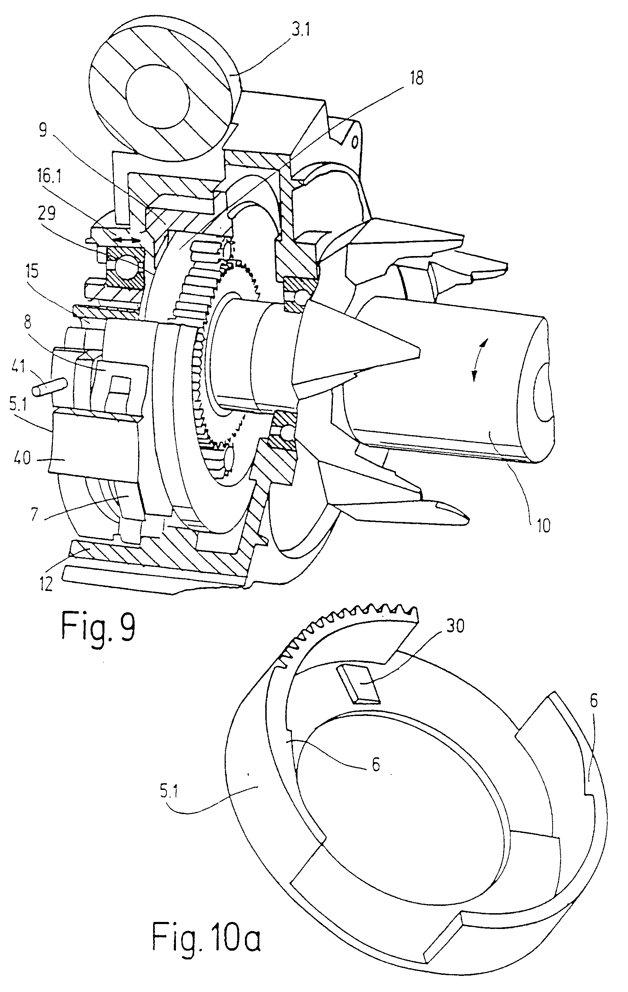

Figur 9 zeigt eine perspektivische Teilschnittansicht der elektrischen Maschine 20 mit Planetengetriebe 1 entsprechend Figur 8. Neben den bereits zur Figur 8 beschriebenen Bauteilen ist hier zusätzlich einer von wenigstens zwei Stiften 41 erkennbar, die für eine axiale Zwangsführung des Verstellringes 5.1 sorgen und damit in den Schaltstellungen I und III für die Freigängigkeit des Hohlrades 9 sorgen und verhindern, dass dieses unkontrolliert mit dem Planetenträger 18 schleifen kann. Das Hohlrad 9 bleibt beim Umschalten von der Schaltstellung II zunächst stehen und folgt nicht dem Axialhub des Innenringes 16.1, wodurch es leicht mit dem Planetenträger 18 schleifen kann. Um dies zu verhindern, sind am Außendurchmesser des Verstellringes 5.1 in axialer Richtung wenigstens zwei mit den Stiften 41 korrespondierende schiefe Ebenen 40 vorgesehen, an denen die Stifte 41 entlanggleiten und somit das Hohlrad 9 vom Planetenträger 18 wegziehen.

Figur 10a zeigt den Verstellring 5.1 in einer perspektivischen Ansicht. Gut erkennbar sind hier die beiden radialen schiefen Ebenen 6 sowie die wenigstens zwei in axialer Richtung wirkenden Erhebungen 30 an seiner kreisrunden flachen Innenseite. Für eine symmetrische Belastung des Verstellringes 5.1 müssen sich die Erhebungen 30 möglichst genau gegenüberstehen, das heißt um einen Winkel von 180° versetzt sein. Ebenso möglich sind jedoch drei, vier oder mehr Erhebungen 30, die entsprechend gleichmäßig über den Kreisumfang verteilt sein sollten.

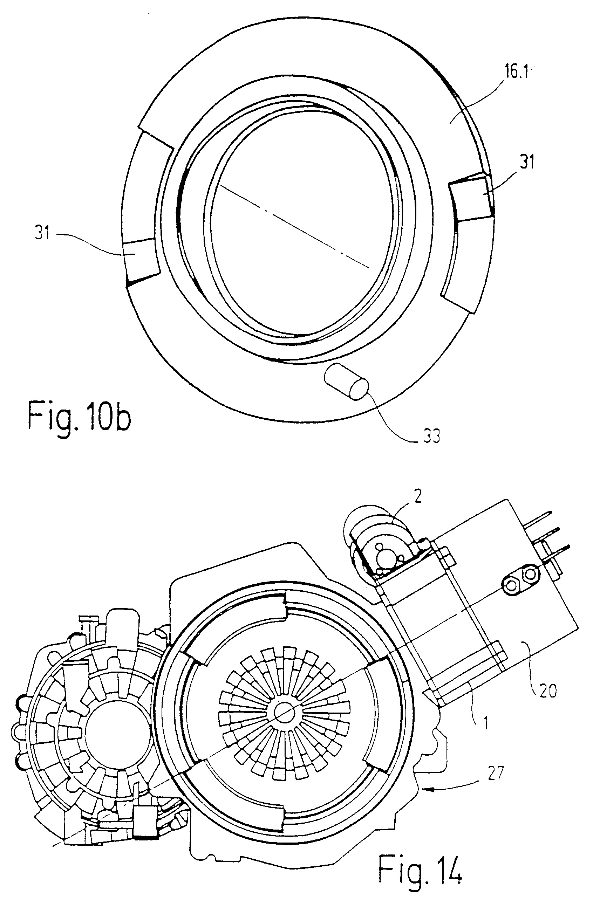

Figur 10b zeigt den modifizierten Innenring 16.1 mit den schiefen Ebenen 31, die jeweils mit den Erhebungen 30 im Verstellring 5.1 korrespondieren, sowie einer außen radial angebrachten Passfeder 33 beziehungsweise einem Stift. Dieser Stift beziehungsweise diese Passfeder 33 gleitet in einer passenden Führung im Gehäuse 12 beziehungsweise im Lagerschild 24 und verhindert eine Verdrehung des Innenringes 16.1, der somit nur axial verschieblich ist.

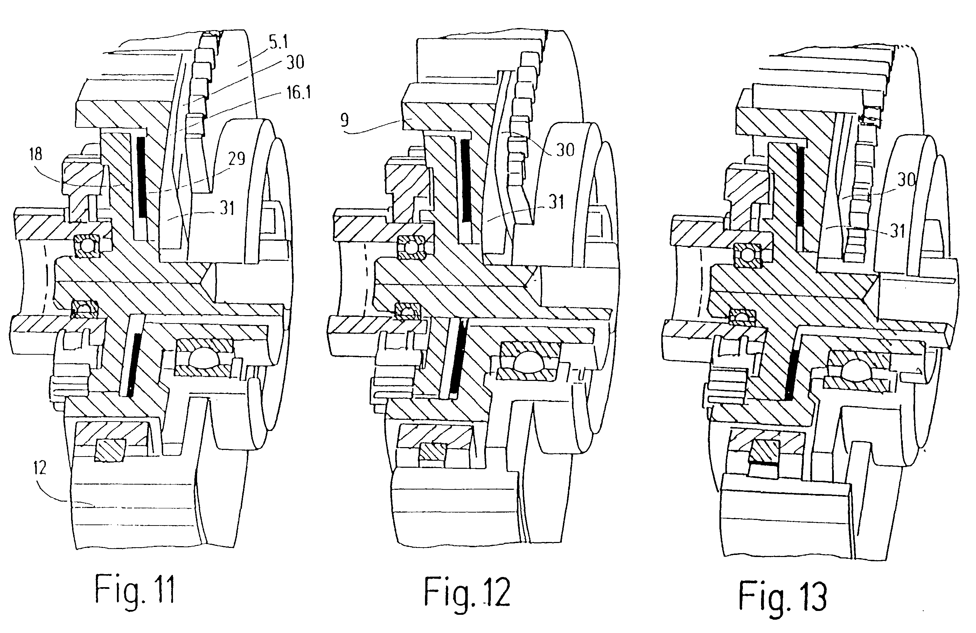

Figur 11 zeigt die Schaltstellung I in einer Teilschnittansicht. Gut erkennbar ist hier die axiale Freigängigkeit der gegeneinander verschieblichen, aus dem Hohlrad 9 mit dem darauf fest aufgebrachten Bremsbelag 29 und dem Planetenträger 18 gebildeten, axialen Kupplung. Weiterhin ist in dieser Ansicht eine auf der runden flachen Seite des Innenringes 16.1 aufgebrachte schiefe Ebene 31 erkennbar, die gegen eine entsprechende Erhebung 30 im Verstellring 5.1 drücken kann, sobald der Verstellring in entsprechende Position gedreht wird.

Figur 12 zeigt in einer perspektivischen Teilschnittansicht die neutrale Schaltstellung III des Planetengetriebes 1.

Figur 13 zeigt die Schaltstellung II des Planetengetriebes 1. Erkennbar ist hierbei die geschlossene axiale Kupplung.

Figur 14 zeigt eine schematische Draufsicht auf die elektrische Maschine 20 entsprechend Figur 7 im eingebauten Zustand. Der Ausgang, das heißt die Planetenträgerwelle 19 des Planetengetriebes 1, ist hierbei mit dem Antriebsstrang des Kraftfahrzeuges wirkverbunden. Erkennbar in der dargestellten Ausführungsform ist ein Schaltgetriebe 27 des Kraftfahrzeuges, mit dessen Eingangswelle die Planetenträgerwelle 19 senkrecht wirkverbunden ist. Dies kann beispielsweise durch eine Kegelzahnradpaarung oder eine Stirnverzahnung mit Tellerrad erfolgen.

## Patentansprüche

1. Elektrische Maschine, insbesondere zum Starten einer Brennkraftmaschine und zur Spannungsversorgung eines Bordspannungsnetzes eines Kraftfahrzeuges, wobei die elektrische Maschine mit einem Planetengetriebe wirkverbunden ist, über das die elektrische Maschine mit der Brennkraftmaschine koppelbar ist, und wobei die elektrische Maschine durch Umschalten des Planetengetriebes zwischen einem gegenüber einem Gehäuse des Planetengetriebes blockierten Hohlrad einerseits und dem gegenüber einem umlaufenden Planetenträger blockierten Hohlrad andererseits zwischen einem Motorbetrieb und einem Generatorbetrieb umschaltbar ist, **dadurch gekennzeichnet, dass** ein zwischen einem feststehenden Gehäuseteil und dem Hohlrad (9) angeordnetes mechanisches Schaltmittel über ein Antriebsmittel in Umfangsrichtung verstellbar ist und in einer ersten Schaltstellung (I) das Hohlrad (9) blockiert und in einer zweiten Schaltstellung (II) das Hohlrad (9) am Planetenträger (18) blockiert.

2. Elektrische Maschine nach Anspruch 1, **dadurch gekennzeichnet, dass** das Planetengetriebe (1) zusätzlich zu den wenigstens zwei Schaltstellungen (I, II) eine Schaltstellung (III) aufweist, in der Hohlrad (9) und Planetenträger (18) frei umlaufen können.

3. Elektrische Maschine nach Anspruch 2, **dadurch gekennzeichnet, dass** das Planetengetriebe (1) in der ersten Schaltstellung (I) eine höhere Übersetzung als in der zweiten Schaltstellung (II) aufweist.

4. Elektrische Maschine nach Anspruch 3, **dadurch gekennzeichnet, dass** die Übersetzung in der ersten Schaltstellung (I) vorzugsweise i = 5 : 1 beträgt.

5. Elektrische Maschine nach Anspruch 4, **dadurch gekennzeichnet, dass** die Übersetzung in der zweiten Schaltstellung (II) vorzugsweise i = 2 : 1 beträgt.

6. Elektrische Maschine nach Anspruch 5, **dadurch gekennzeichnet, dass** das Planetengetriebe (1) über das Antriebsmittel mechanisch umschaltbar ist.

7. Elektrische Maschine nach Anspruch 6, **dadurch gekennzeichnet, dass** das Planetengetriebe (1) über ein mit einem Stellglied eines Schaltgetriebes (27) gekoppeltes, extern betätigbares, mechanisches Schaltmittel betätigbar ist.

8. Elektrische Maschine nach Anspruch 7, **dadurch gekennzeichnet, dass** das mechanische Schaltmittel zur Umschaltung des Planetengetriebes (1) ein Verstellring (5, 5.1) ist.

9. Elektrische Maschine nach Anspruch 8, **dadurch gekennzeichnet, dass** der Verstellring (5, 5.1) einen Abschnitt mit einer Verzahnung (4) aufweist, die mit einem verdrehbaren Ritzel (3) oder einem Schneckentrieb (3.1) wirkverbunden ist.

10. Elektrische Maschine nach einem der vorhergehenden Ansprüche, **dadurch gekennzeichnet, dass** in der ersten Schaltstellung (I) das Hohlrad (9) mittels Reibkraft blockierbar ist.

11. Elektrische Maschine nach einem der vorhergehenden Ansprüche, **dadurch gekennzeichnet, dass** in der zweiten Schaltstellung (II) das Hohlrad (9) mittels Reibkraft am Planetenträger (18) blockierbar ist.

12. Elektrische Maschine nach Anspruch 11, **dadurch gekennzeichnet, dass** die Getrieberäder (9, 56, 58) des Planetengetriebes (1) permanent im Eingriff miteinander stehen.

13. Elektrische Maschine nach Anspruch 12, **dadurch gekennzeichnet, dass** im Planetengetriebe (1) zur reibschlüssigen Verbindung von Hohlrad (9) und Planetenträger (18) ein Bremsbelag (29) vorgesehen ist.

14. Elektrische Maschine nach Anspruch 13, **dadurch gekennzeichnet, dass** der Verstellring (5, 5.1) mit einer Innenseite in Umfangsrichtung wenigstens eine nach innen gerichtete schiefe Ebene (6) aufweist, über die sich ein Bremsbacken (8) abstützt und radial nach innen gegen den Außenumfang des Hohlrades (9) andrückbar ist.

15. Elektrische Maschine nach Anspruch 14, **dadurch gekennzeichnet, dass** der Bremsbacken (8) sich über einen Hebel (7) abstützt.

16. Elektrische Maschine nach einem der Ansprüche 8 bis 15, **dadurch gekennzeichnet, dass** der Verstellring (5) eine Kulissenlaufbahn (14) in Umfangsrichtung mit an einem Ende axialer Neigung aufweist, in die ein an einem Innenring (16) radial nach außen ragender Stift (13) hineinragt, wobei der nicht drehbare Innenring (16) über die Kulissenführung (14) vom Stift (13) axial verschiebbar ist und über ein Wälzlager (17) das Hohlrad (9) stirnseitig gegen den Planetenträger (18) zu drücken vermag.

17. Elektrische Maschine nach einem der Ansprüche 8 bis 16, **dadurch gekennzeichnet, dass** der Verstellring (5) wenigstens eine weitere, in Axialrichtung ansteigende Erhebung (30) aufweist, die mit einer weiteren, in Axialrichtung komplementär ansteigenden schiefen Ebene (31) am Innenring (16) derart zusammenwirkt, dass sie beim Verstellen des Verstellringes (5) in der zweiten Schaltstellung (III) das Hohlrad (9) axial gegen die Stirnseite des Planetenträgers (18) zu drücken vermag.

18. Elektrische Maschine nach einem der vorhergehenden Ansprüche, **dadurch gekennzeichnet, dass** die elektrische Maschine (20) derart über das Planetengetriebe (1) an einen Antriebsstrang der Brennkraftmaschine ankoppelbar ist, dass zum Synchronisieren des Schaltgetriebes (27) die Übersetzungsstufen im Planetengetriebe (1) und damit das Massenträgheitsmoment der elektrischen Maschine (20) entsprechend der gewünschten Drehzahlanpassung des Antriebsstranges wählbar ist.

19. Elektrische Maschine nach einem der vorhergehenden Ansprüche, **dadurch gekennzeichnet, dass** das mechanische Schaltmittel mechanisch, elektromagnetisch, hydraulisch und/oder pneumatisch betätigbar ist.

## Claims

1. Electric machine, in particular for starting an internal combustion engine and for supplying voltage to an on-board electrical system of a motor vehicle, the electric machine being operatively connected to a planetary gear mechanism via which the electric machine can be coupled to the internal combustion engine and the electric machine being capable of being switched over between a motor mode and a generator mode by switching over the planetary gear mechanism between, on the one hand, a ring gear which is locked with respect to a casing of the planetary gear mechanism and, on the other hand, the ring gear which is locked with respect to a rotating planetary carrier, **characterized in that** a mechanical switching means which is arranged between a fixed casing part and the ring gear (9) can be adjusted in the circumferential direction using a drive means, and in a first switched position (I) the ring gear (9) is locked, and in a second switched position (II) the ring gear (9) is locked to the planetary carrier (18).

2. Electric machine according to Claim 1, **characterized in that** the planetary gear mechanism (1) has, in addition to the at least two switched positions (I, II), a switched position (III) in which the ring gear (9) and planetary carrier (18) can rotate freely.

3. Electric machine according to Claim 2, **characterized in that** the planetary gear mechanism (1) has a higher transmission ratio in the first switched position (I) than in the second switched position (II).

4. Electric machine according to Claim 3, **characterized in that** the transmission ratio in the first switched position (I) is preferably i = 5 : 1.

5. Electric machine according to Claim 4, **characterized in that** the transmission ratio in the second switched position (II) is preferably i = 2 : 1.

6. Electric machine according to Claim 5, **characterized in that** the planetary gear mechanism (1) can be switched over mechanically by using the drive means.

7. Electric machine according to Claim 6, **characterized in that** the planetary gear mechanism (1) can be activated using a mechanical switching means which can be activated externally and is coupled to an actuator element of a gear mechanism (27).

8. Electric machine according to Claim 7, **characterized in that** the mechanical switching means for switching over the planetary gear mechanism (1) is an adjustment ring (5, 5.1).

9. Electric machine according to Claim 8, **characterized in that** the adjustment ring (5, 5.1) has a section with a toothing (4) which is operatively connected to a rotatable pinion (3) or a worm drive (3.1).

10. Electric machine according to one of the preceding claims, **characterized in that** the ring gear (9) can be locked in the first switched position (I) by means of frictional force.

11. Electric machine according to one of the preceding claims, **characterized in that** in the second switched position (II) the ring gear (9) can be locked to the planetary carrier (18) by means of frictional force.

12. Electric machine according to Claim 11, **characterized in that** the gearwheels (9, 56, 58) of the planetary gear mechanism (1) are permanently in engagement with one another.

13. Electric machine according to Claim 12, **characterized in that** a brake lining (29) is provided in the planetary gear mechanism (1) for the frictionally locking connection of the ring gear (9) and planetary carrier (18).

14. Electric machine according to Claim 13, **characterized in that** the adjustment ring (5, 5.1) has, with one inner side in the circumferential direction, at least one inwardly directed inclined plane (6) by means of which a brake calliper (8) is supported and can be pressed radially inwardly against the outer circumference of the ring gear (9).

15. Electric machine according to Claim 14, **characterized in that** the brake calliper (8) is supported by means of a lever (7).

16. Electric machine according to one of Claims 8 to 15, **characterized in that** the adjustment ring (5) has a connecting link orbit (14) in the circumferential direction with an axial incline at one end, into which incline a pin (13) which projects radially outwards on an inner ring (16) projects, it being possible to displace the non-rotatable inner ring (16) axially by means of the connecting link guide element (14) of the pin (13), and said non-rotatable inner ring (16) being capable of pressing the ring gear (9) at the ends against the planetary carrier (18) by means of a roller bearing (17).

17. Electric machine according to one of Claims 8 to 16, **characterized in that** the adjustment ring (5) has at least one further elevation (30) which rises in the axial direction and which interacts with a further inclined plane (31), rising in the axial direction in a complementary fashion, on the inner ring (16), in such a way that said elevation (30) is capable of pressing the ring gear (9) axially against the end side of the planetary carrier (18) when the adjustment ring (5) is adjusted in the second switched position (III).

18. Electric machine according to one of the preceding claims, **characterized in that** the electric machine (20) can be coupled to a drive train of the internal combustion engine by means of the planetary gear mechanism (1) in such a way that, in order to synchronize the gear mechanism (27), the transmission ratios in the planetary gear mechanism (1), and thus the mass inertia moment of the electric machine (20), can be selected in accordance with the desired adaptation of the rotational speed of the drive train.

19. Electric machine according to one of the preceding claims, **characterized in that** the mechanical switching means can be activated mechanically, electromagnetically, hydraulically and/or pneumatically.

## Revendications

1. Machine électrique, notamment pour démarrer un moteur à combustion interne ou assurer l'alimentation en tension d'un réseau embarqué d'un véhicule,
en coopérant avec une transmission planétaire qui peut coupler la machine électrique au moteur à combustion interne et
la machine électrique pouvant commuter entre un fonctionnement en moteur et un fonctionnement en générateur par commutation de la transmission planétaire entre, d'une part, une roue à denture intérieure bloquée par rapport au boîtier de la transmission planétaire et, d'autre part, la roue à denture intérieure bloquée par rapport à un porte-satellite en rotation,
**caractérisée par**
un moyen de commutation mécanique entre une partie de boîtier fixe et
la roue à denture intérieure (9), réglé dans la direction périphérique par un moyen d'entraînement et
dans une première position de commutation (1), la roue à denture intérieure (9) est bloquée et dans une seconde position de commutation (II), la roue à denture intérieure (9) est bloquée sur le porte-satellite (18).

2. Machine électrique selon la revendication 1,
**caractérisée en ce que**
la transmission planétaire (1) comporte, en plus d'au moins deux positions de commutation (I, II), une position de commutation (III) pour laquelle la roue à denture intérieure (9) et le porte-satellite (18) peuvent tourner librement.

3. Machine électrique selon la revendication 2,
**caractérisée en ce que**
la transmission planétaire (1) présente un rapport de démultiplication plus élevé dans sa première position de commutation (I) que dans sa seconde position de commutation (II).

4. Machine électrique selon la revendication 3,
**caractérisée en ce que**
dans la première position de commutation (I) le rapport de démultiplication est de préférence i = 5 : 1.

5. Machine électrique selon la revendication 4,
**caractérisée en ce que**
dans la seconde position de commutation (II) le rapport de démultiplication est de préférence i = 2 : 1.

6. Machine électrique selon la revendication 5,
**caractérisée en ce que**
la transmission planétaire (1) est commutée mécaniquement par le moyen d'entraînement.

7. Machine électrique selon la revendication 6,
**caractérisée en ce que**
la transmission planétaire (1) est actionnée par un moyen de commutation mécanique à commande externe par l'intermédiaire d'une transmission de commutation (27) couplée à un organe d'actionnement.

8. Machine électrique selon la revendication 7,
**caractérisée en ce que**
le moyen de commutation mécanique pour commuter la transmission planétaire (1) est une bague d'actionnement (5, 5.1).

9. Machine électrique selon la revendication 8,
**caractérisée en ce que**
la bague d'actionnement (5, 5.1) comporte un segment avec une denture (4) coopérant avec un pignon rotatif (3) ou une transmission à vis (3.1).

10. Machine électrique selon l'une des revendications précédentes,
**caractérisée en ce que**
dans la première position de commutation (I), la roue creuse (9) peut être bloquée par une force de frottement.

11. Machine électrique selon l'une des revendications précédentes,
**caractérisée en ce que**
dans la seconde position de commutation (II), la roue creuse (9) peut être bloquée contre le porte-satellite (18) par une force de frottement.

12. Machine électrique selon la revendication 11,
**caractérisée en ce que**
les roues de transmission (9, 56, 58) de la transmission planétaire (1) sont en prise permanente entre elles.

13. Machine électrique selon la revendication 12,
**caractérisée par**
une garniture de frein (29) prévue dans la transmission planétaire (1) pour assurer la liaison par frottement entre la roue creuse (9) et le porte-satellite (18).

14. Machine électrique selon la revendication 13,
**caractérisée en ce que**
la bague d'actionnement (5, 5.1) présente, par son côté intérieur, dans la direction périphérique, au moins un plan incliné (6) dirigé vers l'intérieur par lequel s'appuie une mâchoire de frein (8) qui peut être pressée radialement vers l'intérieur contre la périphérie extérieure de la roue creuse (9).

15. Machine électrique selon la revendication 14,
**caractérisée en ce que**
la mâchoire de frein (8) s'appuie par l'intermédiaire d'un levier (7).

16. Machine électrique selon l'une des revendications 8 à 15,
**caractérisée en ce que**
la bague de réglage (5) comporte un chemin en forme de coulisse (14) dans la direction périphérique avec une inclinaison axiale à une extrémité dans laquelle pénètre une broche (13) venant radialement en saillie par rapport à une bague intérieure (16),
la bague intérieure (16) non rotative étant coulissée axialement par la broche (13) à l'aide du guide en forme de coulisse (14) et peut pousser, par l'intermédiaire d'un palier à roulement (17), la roue creuse (9) dans la face frontale contre le porte-satellite (18).

17. Machine électrique selon l'une des revendications 8 à 16,
**caractérisée en ce que**
la bague de réglage (5) comporte au moins un autre bossage (30) remontant dans la direction axiale, et qui coopère avec un autre plan incliné à pente complémentaire (31) dans la direction axiale, sur la bague intérieure (16) de façon qu'en déplaçant la bague d'actionnement (5), dans la deuxième position de commutation (III), la roue à denture inté-rieure (9) pousse axialement contre la face frontale du porte-satellite (18).

18. Machine électrique selon l'une quelconque des revendications précédentes,
**caractérisée en ce que**
la machine électrique (20) est couplée à la ligne de transmission du moteur à combustion interne par la transmission planétaire (1) pour que la synchronisation de la transmission de commutation (27) permette de choisir les rapports de démultiplication de la transmission planétaire (1) et ainsi le moment d'inertie de la machine électrique (20) suivant l'adaptation souhaitée à la vitesse de rotation de la ligne de transmission.

19. Machine électrique selon l'une quelconque des revendications précédentes,
**caractérisée en ce que**
le moyen de commutation mécanique est actionné de manière mécanique, électromagnétique, hydraulique et/ou pneumatique.
